# EUROPÄISCHE PATENTANMELDUNG

(11) **EP 4 650 577 A1**
(43) Veröffentlichungstag der Anmeldung: **19.11.2025**
(21) Anmeldenummer: 25169604.3
(22) Anmeldetag: 10.04.2025
(51) Int. Cl.: F01N 1/10, F01N 13/18, H01M 8/0662, F01N 3/00, H01M 8/04119, H01M 8/04291, H01M 8/04828

(54) **SCHALLDÄMPFER, INSBESONDERE FÜR EIN BRENNSTOFFZELLENSYSTEM**

(30) Priorität: 15.05.2024 DE 102024113518; 06.08.2024 DE 102024122344
(71) Anmelder: Purem GmbH, 66539 Neunkirchen (DE)
(72) Erfinder: Wink, Peter, Uhingen (DE); Hammer, Jochen, Stuttgart (DE); Berkemer, Frank, Eningen u. A. (DE); Übele, Thomas, Sulzbach an der Murr (DE); Conrath, Matthias, Karlsruhe (DE)
(74) Vertreter: Ruttensperger Lachnit Trossin Gomoll

(57) **Zusammenfassung**

Ein Schalldämpfer, insbesondere für ein Brennstoffzellensystem, umfasset einen in Richtung einer Schalldämpfer-Längsachse (L) langgestreckten, rohrartigen Schalldämpfermantel (24) aus Kunststoffmaterial, ein an einem ersten axialen Ende (26) des Schalldämpfermantels (24) an dem Schalldämpfermantel (24) festgelegtes erstes Schalldämpferendstück aus Kunststoffmaterial, ein an einem zweiten axialen Ende (30) des Schalldämpfermantels (24) an dem Schalldämpfermantel (24) festgelegtes zweites Schalldämpferendstück (32) aus Kunststoffmaterial sowie an wenigstens einem Schalldämpferendstück (28, 32) wenigstens ein Befestigungselement (41) zum Befestigen des Schalldämpfers (22) an einer Tragstruktur (T).

## Beschreibung

Die vorliegende Erfindung betrifft einen Schalldämpfer, welcher insbesondere in einer Abgasanlage eines Brennstoffzellensystems, beispielsweise in einem Fahrzeug, zum Dämpfen von in dem Brennstoffzellensystem entstehenden und über das Brennstoffzellenabgas sich ausbreitenden Geräuschen genutzt werden kann.

Die im Betrieb eines Brennstoffzellensystems beispielsweise durch Kompressoren oder andere Aggregate generierten Geräusche sind stark abhängig von dem Aufbau, insbesondere auch der für die zu erbringende Brennstoffzellenleistung ausgewählten Dimensionierung, einer beispielsweise als Brennstoffzellenstapel ausgebildeten bzw. einen oder mehrere Brennstoffzellenstapel umfassenden Brennstoffzelle, beispielsweise PEM-Brennstoffzelle. Die effiziente Dämpfung von im Brennstoffzellenbetrieb entstehenden und im Brennstoffzellenabgas transportierten bzw. sich ausbreitenden Geräuschen erfordert eine entsprechende Dimensionierung eines in einer Abgasanlage eines derartigen Brennstoffzellensystems vorgesehenen Schalldämpfers. Auch die Größe des beispielsweise in einem Fahrzeug zur Verfügung stehenden Bauraums ist ein die Dimensionierung eines derartigen Schalldämpfers beeinflussender Faktor.

Es ist die Aufgabe der vorliegenden Erfindung, einen Schalldämpfer, insbesondere für ein Brennstoffzellensystem vorzusehen, welcher in einfacher Art und Weise an verschiedene Einsatzzwecke bzw. Einsatzumgebungen angepasst aufgebaut werden kann.

Gemäß einem ersten Aspekt der vorliegenden Erfindung wird diese Aufgabe gelöst durch einen Schalldämpfer, insbesondere für ein Brennstoffzellensystem, umfassend:
- einen in Richtung einer Schalldämpfer-Längsachse langgestreckten, rohrartigen Schalldämpfermantel aus Kunststoffmaterial,
- ein an einem ersten axialen Ende des Schalldämpfermantels an dem Schalldämpfermantel festgelegtes erstes Schalldämpferendstück aus Kunststoffmaterial,
- ein an einem zweiten axialen Ende des Schalldämpfermantels an dem Schalldämpfermantel festgelegtes zweites Schalldämpferendstück aus Kunststoffmaterial,
- an wenigstens einem Schalldämpferendstück, wenigstens ein Befestigungselement zum Befestigen des Schalldämpfers an einer Tragstruktur.

Der erfindungsgemäß aufgebaute Schalldämpfer ist mit seinem aus Kunststoffmaterial aufgebauten Schalldämpfermantel und seinen beiden ebenfalls aus Kunststoffmaterial aufgebauten Schalldämpferendstücken modular aufgebaut. Da die Schalldämpfungscharakteristik eines derartigen Schalldämpfers im Wesentlichen durch das von dem Schalldämpfermantel umgrenzte Volumen bestimmt ist, kann zur Anpassung eines derartigen Schalldämpfers die Länge des sich zwischen den beiden Schalldämpferendstücken erstreckenden Schalldämpfermantels entsprechend ausgewählt werden. Ein in Zuordnung zu einer bestimmten Einsatzumgebung ausgewählter bzw. bereitgestellter Schalldämpfermantel kann mit als Standardbauteilen ausgebildeten Schalldämpferendstücken verbunden werden, und der so aufgebaute Verbund aus Schalldämpfermantel und Schalldämpferendstücken kann vermittels der ebenfalls als Standardbauteile ausgebildeten Befestigungselemente in die Einsatzumgebung, also beispielsweise ein Fahrzeug, integriert werden.

Für eine einfache und zuverlässige Verbindung der Schalldämpferendstücke mit dem Schalldämpfermantel und gleichermaßen eine einfache Integration des damit aufgebauten Schalldämpfers in eine dafür vorgesehene Einsatzumgebung wird vorgeschlagen, dass wenigstens ein Schalldämpferendstück, vorzugsweise jedes Schalldämpferendstück, von erstem Schalldämpferendstück und zweitem Schalldämpferendstück eine mit dem Schalldämpfermantel verbundene Endstückplatte und einen von der Endstückplatte in Richtung von dem Schalldämpfermantel weg sich erstreckenden Endstückrohrstutzen umfasst.

Eine insbesondere auch unter Berücksichtigung der im Betrieb einer Brennstoffzelle entstehenden Abgastemperaturen stabile Verbindung der Komponenten des Schalldämpfers kann beispielsweise dadurch erreicht werden, dass wenigstens ein Schalldämpferendstück, vorzugsweise jedes Schalldämpferendstück, von erstem Schalldämpferendstück und zweitem Schalldämpferendstück mit dem Schalldämpfermantel durch Materialschluss, vorzugsweise Verkleben oder Verschweißen, beispielsweise Reibschweißen oder Ultraschallschweißen, verbunden ist.

Bei einer anderen, alternativ oder zusätzlich zur materialschlüssigen Verbindung verwendbaren Art der Anbindung des Schalldämpfermantels an eines oder an beide Schalldämpferendstücke kann wenigstens ein Schalldämpferendstück, vorzugsweise jedes Schalldämpferendstück, von erstem Schalldämpferendstück und zweitem Schalldämpferendstück mit dem Schalldämpfermantel durch Formschluss verbunden sein.

Zum einfachen Bereitstellen dieser formschlüssigen Verbindung wird vorgeschlagen, dass an dem wenigstens einen Schalldämpferendstück von erstem Schalldämpferendstück und zweitem Schalldämpferendstück oder/und an dem Schalldämpfermantel wenigstens eine Formschluss-Eingriffsöffnung für ein Formschluss-Eingriffsorgan vorgesehen ist, und dass in wenigstens eine Formschluss-Eingriffsöffnung, vorzugsweise jede Formschluss-Eingriffsöffnung, wenigstens ein Formschluss-Eingriffsorgan eingreift.

Zur Herstellung eines Formschlusses nach Art einer Verrastung kann an dem Schalldämpfermantel in Zuordnung zu dem wenigstens einen Schalldämpferendstück von erstem Schalldämpferendstück und zweitem Schalldämpferendstück wenigstens eine Formschluss-Eingriffsöffnung für ein Formschluss-Eingriffsorgan vorgesehen sein, und an dem wenigstens einen Schalldämpferendstück von erstem Schalldämpferendstück und zweitem Schalldämpferendstück kann in Zuordnung zu wenigstens einer Formschluss-Eingriffsöffnung, vorzugsweise jeder-Formschluss-Eingriffsöffnung, wenigstens ein Formschluss-Eingriffsorgan vorgesehen sein.

Um dabei auch einen gasdichten Aufbau erreichen zu können, kann an dem wenigstens einen Schalldämpferendstück von erstem Schalldämpferendstück und zweitem Schalldämpferendstück ein den Schalldämpfermantel an einer Außenseite oder einer Innenseite in Richtung der Schalldämpfer-Längsachse übergreifender Formschlussrand vorgesehen sein, und das wenigstens eine Formschluss-Eingriffsorgan kann als integraler Bestandteil des wenigstens einen Schalldämpferendstücks von dem Formschlussrand in Richtung auf den Schalldämpfermantel zu hervorstehen und in die zugeordnete Formschluss-Eingriffsöffnung eingreifen.

Für eine alternative Ausgestaltung der formschlüssigen Verbindung unter Verwendung von als separate Bauteile ausgebildeten Formschluss-Eingriffsorganen wird vorgeschlagen, dass an dem wenigstens einen Schalldämpferendstück von erstem Schalldämpferendstück und zweitem Schalldämpferendstück und an dem Schalldämpfermantel wenigstens eine Formschluss-Eingriffsöffnung für ein Formschluss-Eingriffsorgan vorgesehen ist, und dass in wenigstens ein Paar einander überlappend positionierter Formschluss-Eingriffsöffnungen an dem Schalldämpfermantel und dem wenigstens einen Schalldämpferendstück von erstem Schalldämpferendstück und zweitem Schalldämpferendstück ein Formschluss-Eingriffsorgan eingreifend positioniert ist.

Auch bei derartiger Ausgestaltung des Formschlusses kann an dem wenigstens einen Schalldämpferendstück von erstem Schalldämpferendstück und zweitem Schalldämpferendstück ein den Schalldämpfermantel an einer Außenseite oder einer Innenseite in Richtung der Schalldämpfer-Längsachse übergreifender Formschlussrand vorgesehen sein, und die wenigstens eine in dem wenigstens einen Schalldämpferendstück von erstem Schalldämpferendstück und zweitem Schalldämpferendstück vorgesehene Formschluss-Eingriffsöffnung kann in dem Formschlussrand vorgesehen sein.

Bei Ausgestaltung der Formschluss-Eingriffsorgane als separate Bauteile kann wenigstens ein Formschluss-Eingriffsorgan, vorzugsweise jedes Formschluss-Eingriffsorgan, einen Schraubbolzen oder einen Nietbolzen umfassen.

Für eine erhöhte Stabilität und zum Unterstützen eines gasdichten Abschlusses wird vorgeschlagen, dass an dem wenigstens einen Schalldämpferendstück von erstem Schalldämpferendstück und zweitem Schalldämpferendstück in radialem Abstand zu dem Formschlussrand ein Dichtungsrand vorgesehen ist, und dass ein axiales Ende des Schalldämpfermantels zwischen den Formschlussrand und den Dichtungsrand eingreifend angeordnet ist.

Um durch die Verwendung von Gleichteilen den Aufbau möglichst kostengünstig gestalten zu können, können das erste Schalldämpferendstück und das zweite Schalldämpferendstück zueinander identisch ausgebildet sein.

Zur festen Verbindung mit den Befestigungselementen wird vorgeschlagen, dass an wenigstens einem Schalldämpferendstück, vorzugsweise jedem Schalldämpferendstück, von erstem Schalldämpferendstück und zweitem Schalldämpferendstück wenigstens ein Befestigungsbereich zum Befestigen eines Befestigungselements an dem wenigstens einen Schalldämpferendstück vorgesehen ist.

Für eine erhöhte Variabilität oder/und Stabilität beim Integrieren eines erfindungsgemäß aufgebauten Schalldämpfers in eine Einsatzumgebung können an dem wenigstens einen Schalldämpferendstück zwei Befestigungsbereiche jeweils zum Befestigen eines Befestigungselements an dem wenigstens einen Schalldämpferendstück vorgesehen sein.

Zur Abstützung eines jeweiligen Befestigungselements an einem Schalldämpferendstück wird vorgeschlagen, dass jeder an dem wenigstens einen Schalldämpferendstück vorgesehene Befestigungsbereich wenigstens eine Befestigungselement-Anlagefläche aufweist, und dass die den beiden Befestigungsbereichen zugeordneten Befestigungselement-Anlageflächen bezüglich der Schalldämpfer-Längsachse im Wesentlichen voneinander weg orientiert sind.

Eine stabile Anbindung der Befestigungselemente an ein jeweiliges Schalldämpferendstück kann beispielsweise dadurch gewährleistet werden, dass jeder Befestigungsbereich wenigstens zwei Befestigungsstellen aufweist, wobei an jeder Befestigungsstelle ein Befestigungselement durch ein Befestigungsorgan, vorzugsweise Schraubbolzen, an dem wenigstens einen Schalldämpferendstück festlegbar ist.

Dabei kann eine auch unter starker mechanischer Belastung zuverlässige Verbindung dadurch gewährleistet werden, dass jede Befestigungsstelle ein in das Kunststoffmaterial des wenigstens einen Schalldämpferendstücks eingebettetes Innengewindeorgan umfasst, vorzugsweise wobei das Innengewindeorgan mit Metallmaterial aufgebaut ist.

Jeder Befestigungsbereich kann wenigstens einen an die Endstückplatte und den Endstückrohrstutzen des wenigstens einen Schalldämpferendstücks anschließenden Befestigungsvorsprung umfassen. Somit wird die strukturelle Festigkeit eines Schalldämpferendstücks im Bereich der Endstückplatte bzw. des Endstückrohrstutzens durch die Anbindung eines oder mehrerer Befestigungselemente nicht beeinträchtigt. Vielmehr trägt ein derartiger Befestigungsvorsprung zum Erhöhen der Stabilität eines Schalldämpferendstücks bei.

Wenn dabei vorgesehen ist, dass jeder Befestigungsbereich in Zuordnung zu jeder Befestigungsstelle einen Befestigungsvorsprung umfasst, wobei die einem Befestigungsbereich zugeordneten Befestigungsvorsprünge in Abstand zueinander angeordnet sind, wird trotz hoher struktureller Festigkeit der Einsatz übergroßer Mengen von Kunststoffmaterial zum Aufbau der Schalldämpferendstücke vermieden.

Zur Anbindung an ein Schalldämpferendstück bzw. einen daran vorgesehenen Befestigungsbereich kann jedes Befestigungselement einen Gegen-Befestigungsbereich zur Festlegung an einem Befestigungsbereich umfassen.

Zur Verbesserung der Schalldämpfungscharakteristik kann in dem Schalldämpfermantel Schalldämpfungsmaterial angeordnet sein, welches beispielsweise poröses oder/und geschäumtes Material oder/und Fasermaterial umfassen kann oder/und eine Innenoberfläche des Schalldämpfermantels wenigstens bereichsweise überdecken kann.

Da im Betrieb einer Brennstoffzelle Wasser entsteht bzw. im Brennstoffzellenabgas beispielsweise in Form von Dampf enthalten ist, kann zum Sammeln von im Bereich eines derartigen Schalldämpfers auskondensierendem bzw. sich niederschlagendem Wasser an einem Umfangsbereich des Schalldämpfermantels eine vorzugsweise in Richtung der Schalldämpfer-Längsachse sich erstreckende Flüssigkeit-Sammelausformung vorgesehen sein.

Für eine erhöhte Stabilität des erfindungsgemäß aufgebauten Schalldämpfers kann an einer Außenseite des Schalldämpfermantels wenigstens eine Versteifungsrippe, vorzugsweise eine Mehrzahl von in Richtung der Schalldämpfer-Längsachse aufeinander folgend angeordneten Versteifungsrippen oder/und eine Mehrzahl von in Umfangsrichtung um die Schalldämpfer-Längsachse aufeinander folgend angeordneten Versteifungsrippen, vorgesehen sein.

Alternativ oder zusätzlich kann an einer Innenseite des Schalldämpfermantels wenigstens eine Versteifungsrippe, vorzugsweise eine Mehrzahl von in Richtung der Schalldämpfer-Längsachse aufeinander folgend angeordneten Versteifungsrippen oder/und eine Mehrzahl von in Umfangsrichtung um die Schalldämpfer-Längsachse aufeinander folgend angeordneten Versteifungsrippen, vorgesehen sein.

Eine möglichst gleichmäßige Aussteifung bei leichter Herstellbarkeit des Schalldämpfermantels kann erreicht werden, wenn wenigstens eine Versteifungsrippe, vorzugsweise jede Versteifungsrippe, sich im Wesentlichen in Richtung der Schalldämpfer-Längsachse erstreckt, oder/und wenn wenigstens eine Versteifungsrippe, vorzugsweise jede Versteifungsrippe, sich im Wesentlichen in Umfangsrichtung um die Schalldämpfer-Längsachse erstreckt.

Die Erfindung betrifft ferner ein Brennstoffzellensystem, insbesondere für ein Fahrzeug, umfassend wenigstens eine Brennstoffzelle und eine Brennstoffzellenabgas von der wenigstens einen Brennstoffzelle aufnehmende Brennstoffzellen-Abgasanlage mit wenigstens einem erfindungsgemäß aufgebauten Schalldämpfer.

Gemäß einem weiteren Aspekt wird die eingangs angeführte Aufgabe gelöst durch ein Verfahren zur Herstellung eines erfindungsgemäß aufgebauten Schalldämpfers, umfassend die Maßnahmen:
a) Bereitstellen des Schalldämpfermantels durch Abtrennen eines Längenabschnitts von einem Schalldämpfermantel-Rohling,
b) Bereitstellen des ersten Schalldämpferendstücks und des zweiten Schalldämpferendstücks,
c) Festlegen des ersten Schalldämpferendstücks an dem ersten axialen Ende des Schalldämpfermantels und Festlegen des zweiten Schalldämpferendstücks an dem zweitem axialen Ende des Schalldämpfermantels.

Für eine einfach und kostengünstig durchzuführende Bereitstellung des Schalldämpfermantels kann der bei der Maßnahme a) zum Bereitstellen des Schalldämpfermantels verwendete Schalldämpfermantel-Rohling durch Extrusion oder Blasformen hergestellt werden.

Da die Schalldämpferendstücke im Vergleich zum Schalldämpfermantel eine vergleichsweise komplexe Formgebung aufweisen können, ist es vorteilhaft, wenn das erste Schalldämpferendstück und das zweite Schalldämpferendstück mit einem Kunststoff-Gussverfahren hergestellt werden.

Zur definierten Einstellung der Schalldämpfungscharakteristik kann die Maßnahme a) eine Maßnahme a1) zum Anordnen von Schalldämpfungsmaterial in dem Schalldämpfermantel umfasst.

Dabei kann der Schalldämpfermantel mit in diesen integriertem Schalldämpfungsmaterial in einfacher Weise bereitgestellt werden, wenn die Maßnahme a1) das Anordnen eines Schalldämpfungsmaterial-Rohlings in dem Schalldämpfermantel-Rohling vor dem Abtrennen des Längenabschnitts umfasst. Alternativ oder zusätzlich kann die Maßnahme a1) das Anordnen wenigstens eines Schalldämpfungsmaterial-Körpers in dem Längenabschnitt nach dem Abtrennen des Längenabschnitts umfassen.

Für einen stabilen Verbund des Schalldämpfermantels mit den Schalldämpferendstücken wird vorgeschlagen, dass die Maßnahme c) das Festlegen des ersten Schalldämpferendstücks und des zweiten Schalldämpferendstücks an dem Schalldämpfermantel durch Materialschluss, vorzugsweise Verkleben oder Verschweißen, oder/und durch Formschluss umfasst.

Um den Schalldämpfer zum Einbau in eine Einsatzumgebung zu konfigurieren, kann ferner in einer vorzugsweise nach der Maßnahme c) durchgeführten Maßnahme d) an wenigstens einem Schalldämpferendstück, vorzugsweise jedem Schalldämpferendstück, von erstem Schalldämpferendstück und zweitem Schalldämpferendstück wenigstens ein Befestigungselement, vorzugsweise durch Verschrauben, festgelegt werden.

Die vorliegende Erfindung wird nachfolgend mit Bezug auf die beiliegenden Figuren detailliert beschrieben. Es zeigt:
- Fig. 1: eine Seitenansicht eines Schalldämpfers für eine Abgasanlage eines Brennstoffzellensystems;
- Fig. 2: eine perspektivische Ansicht des Schalldämpfers der Fig. 1;
- Fig. 3: eine Axialansicht des Schalldämpfers der Fig. 1 und 2 in Blickrichtung III in Fig. 2;
- Fig. 4: eine perspektivische Ansicht des Schalldämpfers der Fig. 1 und 2 mit an Schalldämpferendstücken festgelegten Befestigungselementen;
- Fig. 5: einen mit nur einem Schalldämpferendstück verbundenen Schalldämpfermantel des Schalldämpfers der Fig. 1 und 2;
- Fig. 6: ein Befestigungselement für den Schalldämpfer der Fig. 1 und 2;
- Fig. 7: eine der Fig. 5 entsprechende Darstellung einer alternativen Ausgestaltungsart eines Schalldämpfermantels;
- Fig. 8: eine weitere der Fig. 5 entsprechende Darstellung einer alternativen Ausgestaltungsart eines Schalldämpfermantels;
- Fig. 9: eine weitere der Fig. 5 entsprechende Darstellung einer alternativen Ausgestaltungsart eines Schalldämpfermantels;
- Fig. 10: eine weitere der Fig. 5 entsprechende Darstellung einer alternativen Ausgestaltungsart eines Schalldämpfermantels;
- Fig. 11: eine alternative Art der Anbindung eines Schalldämpferendstücks an einen Schalldämpfermantel;
- Fig. 12: eine Detailansicht der in Fig. 11 dargestellten Ausgestaltungsart;
- Fig. 13: eine weitere alternative Art der Anbindung eines Schalldämpferendstücks an einen Schalldämpfermantel;
- Fig. 14: ein Brennstoffzellensystem in prinzipartiger Darstellung.

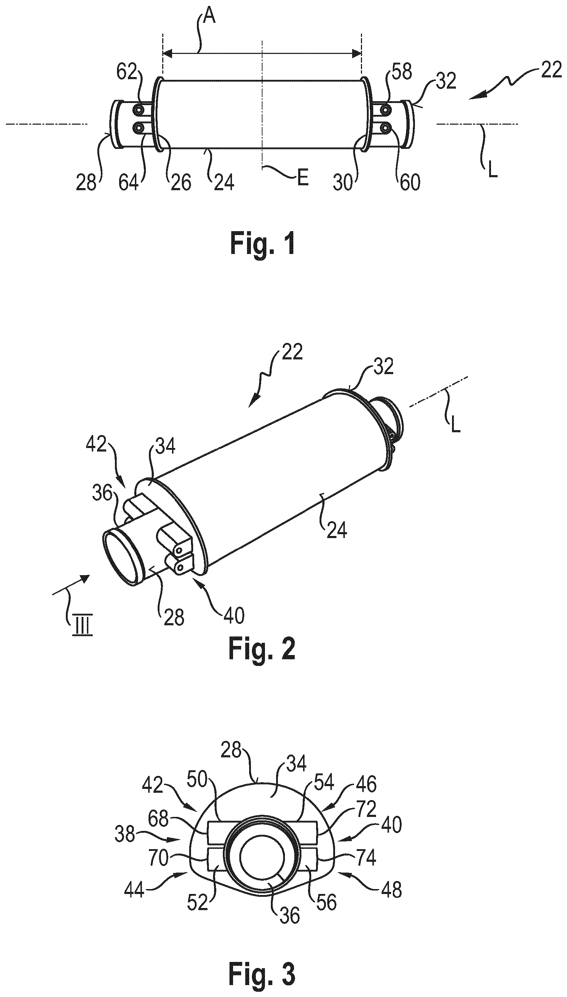

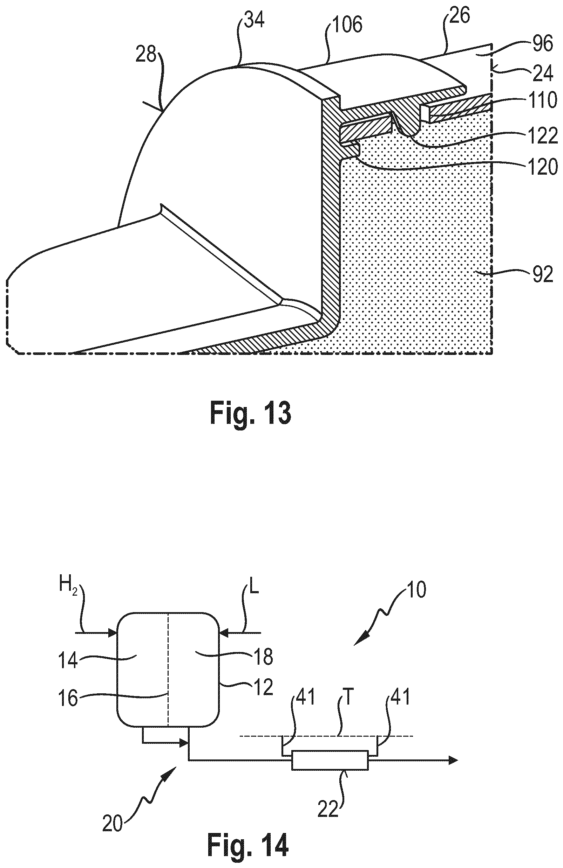

Bevor nachfolgend mit Bezug auf die Fig. 1 bis 13 detailliert der Aufbau eines Schalldämpfers beschrieben wird, wird mit Bezug auf die Fig. 14 der Aufbau eines Brennstoffzellensystems 10 erläutert, in welchem ein derartiger Schalldämpfer Anwendung finden kann.

Das Brennstoffzellensystem 10 umfasst eine beispielsweise als Brennstoffzellenstapel ausgebildete Brennstoffzelle 12, insbesondere PEM- Brennstoffzelle, mit einem Anodenbereich 14 und einem durch eine Polymermembran 16 vom Anodenbereich 14 getrennten Kathodenbereich 18. Dem Anodenbereich 14 wird Wasserstoff H₂ oder ein Wasserstoff enthaltendes Gas als Anodengas zugeführt. Dem Kathodenbereich 18 wird Sauerstoff bzw. ein Sauerstoff enthaltendes Gas, beispielsweise Luft L, als Kathodengas zugeführt. Im Brennstoffzellenbetrieb entstehendes Kathodenabgas oder/und Anodenabgas wird als Brennstoffzellenabgas einer Abgasanlage 20 des Brennstoffzellensystems 10 zugeführt und über die Abgasanlage 20 zur Umgebung ausgestoßen.

Die Abgasanlage 20 kann verschiedene Systembereiche umfassen. Insbesondere kann die Abgasanlage 20 einen an einer Tragstruktur **T,** beispielsweise dem Unterboden eines Fahrzeugs, getragenen Schalldämpfer 22 umfassen, der dazu dient, im Betrieb des Brennstoffzellensystem 10 entstehende Geräusche zu dämpfen, so dass diese nicht oder nur gedämpft über das Brennstoffzellenabgas zur Umgebung abgegeben werden. Auch weitere Systembereiche, wie beispielsweise ein separater Wasserabscheider zum Abscheiden von im Brennstoffzellenabgas enthaltenem Wasser bzw. Dampf, können in der Abgasanlage 20 vorgesehen sein.

Der Aufbau des Schalldämpfers 22 bzw. die Vorgehensweise beim Herstellen des Schalldämpfers 22 der Abgasanlage 20 wird nachfolgend mit Bezug auf die Fig. 1 bis 13 im Zusammenhang mit verschiedenen Ausgestaltungsarten eines derartigen Schalldämpfers 22 erläutert.

Der Schalldämpfer 22 ist grundsätzlich in Richtung einer Schalldämpfer-Längsachse L langgestreckt und weist einen in Richtung der Schalldämpfer-Längsachse L langgestreckten, rohrartigen Schalldämpfermantel 24 auf. Da eine Temperatur des Brennstoffzellenabgases einen Wert von 120°C im Allgemeinen nicht übersteigt, ist aus Kostengründen und aus Gründen des geringeren Gewichts der Brennstoffzellenmantel 24 aus Kunststoffmaterial aufgebaut.

An einem ersten axialen Ende 26 des Brennstoffzellenmantels 24 ist ein erstes Schalldämpferendstück 28 festgelegt. Das erste Schalldämpferendstück 28 ist ebenfalls mit Kunststoffmaterial aufgebaut und kann mit dem Schalldämpfermantel 24 durch Materialschluss, beispielsweise durch Verkleben oder Verschweißen, insbesondere Reibschweißen oder Ultraschallschweißen, fest und gasdicht verbunden werden.

An einem zweiten axialen Ende 30 des Schalldämpfermantels 24 ist ein zweites Schalldämpferendstück 32 festgelegt. Das zum ersten Schalldämpferendstück 28 baugleiche, also zu diesem identisch aufgebaute zweite Schalldämpferendstück 32 ist mit dem Schalldämpfermantel 24 gleichermaßen durch Materialschluss verbunden. Da die beiden Schalldämpferendstücke 28, 32 zueinander identisch aufgebaut sind und vorzugsweise der Schalldämpfermantel 24 in Richtung der Schalldämpfer-Längsachse L eine zylindrische Gestalt, also eine ihren Querschnitt nicht ändernde Gestalt, aufweist, ist der gesamte Schalldämpfer 22 zu einer zur Schalldämpfer-Längsachse L orthogonalen Schalldämpfer-Mittenebene E im Wesentlichen spiegelsymmetrisch aufgebaut.

Jedes der beiden zueinander identisch aufgebauten Schalldämpfer-Endstücke 28, 32 weist, wie in den Fig. 2 und 3 anhand des am ersten Ende 26 des Schalldämpfermantels 24 festgelegten ersten Schalldämpferendstücks 28 erkennbar, eine mit dem Schalldämpfermantel 24 verbundene Endstückplatte 34 und einen von der Endstückplatte 34 in Richtung vom Schalldämpfermantel 24 sich weg erstreckenden Endstückrohrstutzen 36 auf. An die Endstückrohrstutzen 36 können weitere rohrartig bzw. schlauchartig ausgebildete Abgasführungskomponenten der Abgasanlage 20 angebunden werden.

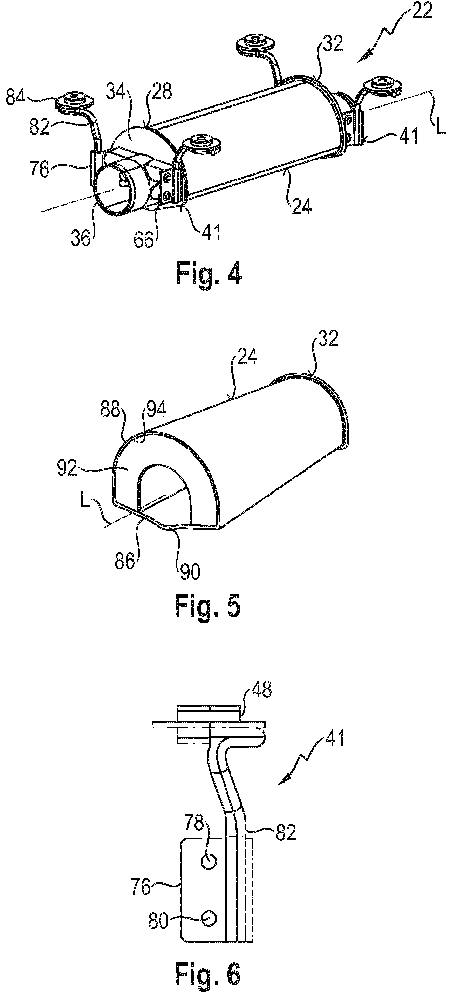

Jedes der beiden Schalldämpferendstücke 28, 30 weist zwei Befestigungsbereiche 38, 40 auf. In jedem Befestigungsbereich 38, 40 kann ein in Fig. 6 dargestelltes Befestigungselement 41 festgelegt werden. Vermittels derartiger Befestigungselemente 41 kann der Schalldämpfer 22 an der Tragstruktur T festgelegt werden.

Jeder Befestigungsbereich 38, 40 umfasst zwei Befestigungsstellen 42, 44 bzw. 46, 48. Jede Befestigungsstelle 42, 44, 46, 48 umfasst einen als integralen Bestandteil des jeweiligen Schalldämpferendstücks 28, 32 ausgebildeten Befestigungsvorsprung 50, 52, 54, 56, der sich im Angrenzungsbereich des Endstückrohrstutzens 36 an die Endstückplatte 34 erstreckt bzw. an diese jeweils anschließt. Man erkennt in Fig. 3, dass zwischen den beiden einem jeweiligen Befestigungsbereich 38, 40 zugeordneten Befestigungsvorsprüngen 50, 52 bzw. 54, 56 ein Zwischenraum vorhanden ist, so dass bei gleichwohl hoher struktureller Festigkeit ein übermäßiger Einsatz von Kunststoffmaterial zum Aufbau der Schalldämpferendstücke 28, 32 vermieden werden kann.

In jedem der Befestigungsvorsprünge 50, 52, 54, 56 ist zum Bereitstellen einer jeweiligen Befestigungsstelle 42, 44 bzw. 46, 48 ein nach Art einer Mutter ausgebildetes Innengewindeorgan 58, 60, 62, 64 vorgesehen. Die Innengewindeorgane 58, 60, 62, 64 können beispielsweise bei Herstellung der Schalldämpferendstücke 28, 30 in einem Kunststoff-Gussvorgang von dem Kunststoff-Aufbaumaterial für die Schalldämpferendstücke 28, 32 umgossen werden. Alternativ können die Innengewindeorgane 58, 60, 62, 64 nachträglich in die Schalldämpferendstücke 28, 32 eingebracht und darin beispielsweise durch Verklebung festgelegt werden. Bei einer weiteren alternativen Ausgestaltung können die Befestigungsstellen 42, 44, 46, 48 in den jeweiligen Befestigungsvorsprüngen 50, 52, 54, 56 vorgesehene Öffnungen umfassen, die beispielsweise mit einem Innengewinde ausgebildet sein können oder in welche zum Einbinden der Befestigungselemente 41 eingesetzte und in Fig. 4 erkennbare Befestigungsorgane 66, beispielsweise Schraubbolzen, eingeschraubt werden können.

Jeder der Befestigungsbereiche 38, 40 stellt an den beiden Befestigungsvorsprüngen 50, 52 bzw. 54, 56 desselben jeweils Befestigungselement-Anlageflächen 68, 70 bzw. 72, 74 bereit, an welchen ein jeweiliger plattenartiger Gegen-Befestigungsbereich 76 der Befestigungselemente 41 zur Anlage gebracht werden kann. In dem Gegen-Befestigungsbereich 76 sind Durchgriffsöffnungen 78, 80 vorgesehen, durch welche die zum Festlegen eines jeweiligen Befestigungselements 41 an einem der Befestigungsbereiche 38, 40 eingesetzten Befestigungsorgane 66 hindurch in die Befestigungsvorsprünge 50, 52, 54, 56 eingebracht werden können.

Zur Anbindung an die Tragstruktur T weisen die Befestigungselemente 41, die zueinander vorzugsweise ebenfalls baugleich, also identisch aufgebaut sein können, einen von dem Gegen-Befestigungsbereich 76 sich erstreckenden Schenkel 82 auf, an dessen vom Gegen-Befestigungsbereich 76 entfernten Ende ein beispielsweise mit elastischem Material aufgebautes Verbindungselement 84 vorgesehen ist. Durch dieses hindurch kann ein beispielsweise als Schraubbolzen oder dergleichen ausgebildetes weiteres Befestigungsorgan in die Tragstruktur T eingebracht werden, um dadurch eine feste Anbindung eines jeweiligen Befestigungselements 41 an die Tragestruktur T zu gewährleisten.

Der in Richtung der Schalldämpfer-Längsachse L mit vorzugsweise zylindrischer Gestalt ausgebildeter Schalldämpfermantel 24 weist, wie in Fig. 5 deutlich zu erkennen, in einem Umfangsbereich desselben einen Bodenbereich 86 auf, an welchen ein den weiteren Umfangsbereich des Schalldämpfermantels 24 bereitstellender Bogenbereich 88 anschließt. Der Bodenbereich 86 kann in Richtung zu einer Flüssigkeit-Sammelausformung 90 hin beidseits ein Gefälle aufweisen, so dass im Innenbereich des Schalldämpfers 22 sich niederschlagende Flüssigkeit in dem in Vertikalrichtung unten positionierten Bodenbereich 86 bzw. der Flüssigkeit-Sammelausformung 90 sich ansammeln. Der Schalldämpfer 22 weist mit Ausnahme der in den Endstückrohrstutzen 36 der Schalldämpferendstücke 28, 32 ausgebildeten Öffnungen zum Einleiten und Ausleiten von Brennstoffzellenabgas keine weiteren Öffnungen im Schalldämpfermantel 24 bzw. den Schalldämpferendstücken 28, 32 auf. Im Brennstoffzellenbetrieb im Schalldämpfer 22 im Bereich der Flüssigkeit-Sammelausformung 90 sich ansammelnde Flüssigkeit wird durch das den Schalldämpfer 22 durchströmende, vergleichsweise warme Brennstoffzellenabgas wieder aus diesem ausgetragen.

Die Fig. 5 zeigt ferner, dass im Inneren des Schalldämpfers 22 Schalldämpfungsmaterial 92 angeordnet ist. Das Schalldämpfungsmaterial 92 kann beispielsweise den Schalldämpfermantel 24 an dessen Innenoberfläche 94 im Bogenbereich 88 überdecken. Das Schalldämpfungsmaterial 24 kann mit porösem Material, beispielsweise einem offenzelligen Schaummaterial oder dergleichen, aufgebaut sein und somit effizient für Dämpfung von im Brennstoffzellenabgas sich ausbreitenden Geräuschen durch Absorption beitragen. Bei einer alternativen Ausgestaltungsart kann das Schalldämpfungsmaterial 92 mit Fasermaterial, beispielsweise einem PET-Vlies oder dergleichen, aufgebaut sein.

Bei der Herstellung des Schalldämpfers 22 können die beiden Schalldämpferendstücke 28, 32 mit dem vorangehend beschriebenen, zueinander identischen Aufbau als Standardbauteile in einem Kunststoff-Gussverfahren, beispielsweise Spritzgießen oder dergleichen, hergestellt werden. Dadurch ist es möglich, die Schalldämpferendstücke 28, 32 in einfacher und präziser Art und Weise mit vergleichsweise komplexer Formgebung bereitzustellen.

Der Schalldämpfermantel 24 kann durch Abtrennen eines Längenabschnitts A von einem Schalldämpfermantel-Rohling bereitgestellt werden. Der Schalldämpfermantel-Rohling kann beispielsweise in einem Extrusionsverfahren oder einem Blasformverfahren mit im Wesentlichen beliebiger Querschnittsgeometrie und Länge hergestellt werden. Von einem derartigen Schalldämpfermantel-Rohling kann der Schalldämpfermantel 24 mit der für einen jeweiligen Einsatzzweck und die dafür zu erreichende Schalldämpfungscharakteristik geeigneten Länge des Längenabschnitts A abgetrennt und für die weitere Herstellung des Schalldämpfers 22 bereitgestellt werden.

An den so bereitgestellten Schalldämpfermantel 24 können an den beiden axialen Enden 26, 30 die beiden Schalldämpferendstücke 28, 32 durch Materialschluss angebunden werden. Vorzugsweise nach dem Anbinden der Schalldämpferendstücke 28, 32 an den Schalldämpfermantel 24 werden an den beiden Schalldämpferendstücken 28, 30 an einem oder beiden Befestigungsbereichen 38, 40 die Befestigungselemente 41 angebracht.

Das Schalldämpfungsmaterial 92 kann im Inneren des Schalldämpfermantels 24 beispielsweise dadurch bereitgestellt werden, dass bereits bei der Herstellung eines Schalldämpfermantel-Rohlings in diesem Schalldämpfungsmaterial enthalten ist. Beispielsweise kann beim Herstellungsvorgang des Schalldämpfermantel-Rohlings ein Schalldämpfungsmaterial-Rohling mit dem Aufbaumaterial des Schalldämpfermantels 23 umformt werden, oder es kann ein Schalldämpfungsmaterial-Rohling in den Schalldämpfermantel-Rohling eingepresst werden. Beim Abtrennen des Längenabschnitts A von dem Schalldämpfermantel-Rohling wird dann ein entsprechender Längenabschnitt des Schalldämpfungsmaterials von dem Schalldämpfungsmaterial-Rohling abgetrennt.

Alternativ kann nach dem Abtrennen des Längenabschnitts A von dem Schalldämpfermantel-Rohling ein Schalldämpfungsmaterial-Körper in den Längenabschnitt A eingeschoben bzw. eingepresst werden. Dieser Schalldämpfungsmaterial-Körper kann beispielsweise durch Abtrennen von einem Schalldämpfungsmaterial-Rohling bereitgestellt werden. In dem Schalldämpfermantel 24 können auch mehrere derartige Schalldämpfungsmaterial-Körper angeordnet werden, und es besteht die Möglichkeit, die beiden vorangehend beschriebenen Alternativen zum Bereitstellen des Schalldämpfungsmaterials 92 in dem Schalldämpfermantel 24 miteinander zu kombinieren.

Das Schalldämpfungsmaterial 92 wird im Schalldämpfermantel 24 durch die beiden an dessen axiale Enden 26, 30 angebundenen Schalldämpferendstücke 28, 32 axial festgehalten, so dass keine zusätzlichen Befestigungsmaßnahmen erforderlich sind.

Mit dem erfindungsgemäß aufgebauten Schalldämpfer bzw. dem Verfahren zu dessen Herstellung besteht in einfacher Art und Weise die Möglichkeit, durch Einsatz von Standardbauteilen eine Anpassung des Schalldämpfers an verschiedene Einsatzumgebungen dadurch zu erreichen, dass, angepasst an eine jeweilige Einsatzumgebung, der Schalldämpfermantel mit der für die zu erzielende Schalldämpfungscharakteristik vorgesehenen Länge bereitgestellt wird und an dessen beide axialen Enden die als Gleichteile aufgebauten Schalldämpferendstücke angebunden werden. Für die Herstellung aller Komponenten des Schalldämpfers können Standard-Herstellungsverfahren und insbesondere auch Standardmaterialien eingesetzt werden, was einerseits zur einfach und zuverlässig durchzuführenden Herstellungsprozessen führt und andererseits zu einem Schalldämpferaufbau führt, welcher ohne wesentliche weitere Anpassungsmaßnahmen für einen jeweils beabsichtigten Einsatzzweck geeignet ist.

Da zur Anbindung der zum Festlegen des Schalldämpfers an einer Tragstruktur vorgesehenen Befestigungselemente die an den axialen Enden des Schalldämpfermantels angebrachten Schalldämpferendstücke genutzt werden, ist es nicht erforderlich, am Schalldämpfermantel selbst irgendwelche baulichen Maßnahmen zur Anbindung derartiger Befestigungselemente an diesen vorzusehen. Dies unterstützt die einfache Herstellbarkeit des Schalldämpfermantels durch Abtrennen eines Längenabschnitts von einem vorgefertigten Schalldämpfermantel-Rohling.

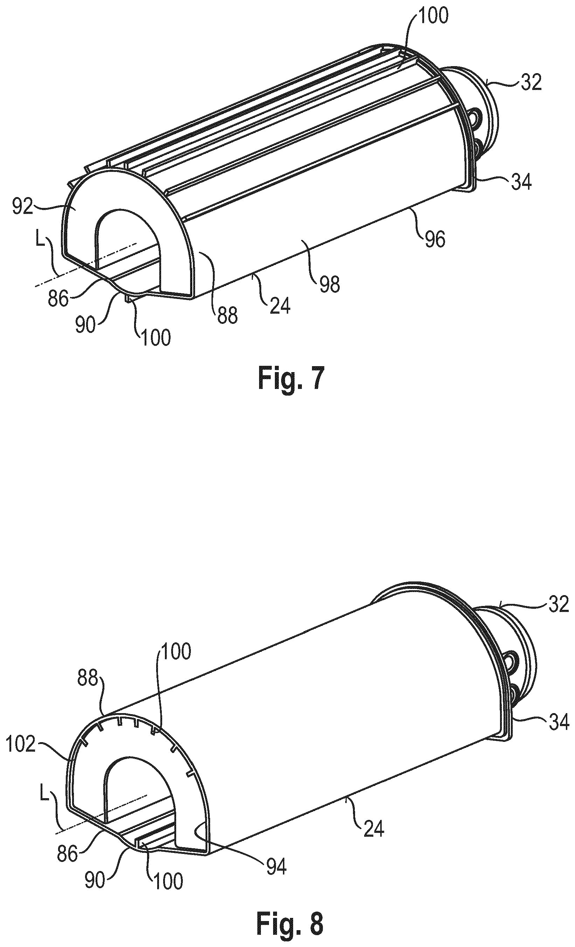

Die Fig. 7 zeigt eine der Fig. 5 entsprechende Darstellung einer alternativen Ausgestaltungsart des Schalldämpfermantels 24. An einer Außenseite 96 des Schalldämpfermantels 24 sind von einer Außenoberfläche 98 nach außen hervorstehend mehrere im Wesentlichen in Richtung der Schalldämpfer-Längsachse L sich erstreckende Versteifungsrippen 100 vorgesehen. Die im Bogenbereich 88 vorgesehenen Versteifungsrippen 100 weisen zueinander in Umfangsrichtung um die Schalldämpfer-Längsachse L einen im Wesentlichen gleichmäßigen Abstand auf. Auch im Bodenbereich 86, beispielsweise im Bereich der Sammelausformung 90, kann eine derartige Versteifungsrippe 100 sich in Richtung der Schalldämpfer-Längsachse L erstreckend vorgesehen sein. Am Bodenbereich 86 können beispielsweise auch mehrere seitlich nebeneinander im Wesentlichen in Richtung der Schalldämpfer-Längsachse L verlaufende Versteifungsrippen 100 vorgesehen sein.

Bei einer in Fig. 8 dargestellten alternativen Ausgestaltungsart sind die Versteifungsrippen 100 am Bogenbereich 88 und die Versteifungsrippe 100 am Bodenbereich 86 an einer Innenseite 102 des Schalldämpfermantels 24 von der Innenoberfläche 94 nach innen hervorstehend ausgebildet. Auch diese Versteifungsrippen 100 erstrecken sich im Wesentlichen in Richtung der Schalldämpfer-Längsachse L. Die am Bogenbereich 88 vorgesehenen Versteifungsrippen 100 greifen in das Schalldämpfungsmaterial 92 ein und tragen somit zu einer zusätzlichen formschlüssigen Arretierung desselben bei.

Da bei den in den Fig. 7 und 8 dargestellten Ausgestaltungsformen des Schalldämpfermantels 24 die Versteifungsrippen 100 sich im Wesentlichen in Richtung der Schalldämpfer-Längsachse L erstrecken, welche im Wesentlichen auch der Herstellungsrichtung bei Herstellung eines Schalldämpfermantel-Rohlings in einem Extrusionsvorgang entspricht, können diese Versteifungsrippen 100 beim Extrudieren des Schalldämpfermantel-Rohlings mitgeformt werden.

Da beim Abtrennen eines Längenabschnitts von dem Schalldämpfermantel-Rohling zum Bereitstellen eines Schalldämpfermantels 24 auch im Bereich der Versteifungsrippen 24 Stirnflächen gebildet werden, steht eine größere Gesamtoberfläche für die materialschlüssige Anbindung der Schalldämpfer-Endstücke 28, 32 an den Schalldämpfermantel 24 bereit. Hierzu ist es insbesondere bei Vorsehen der Versteifungsrippen 100 an der Außenseite 96 des Schalldämpfermantels 24 vorteilhaft, wenn, wie dies insbesondere auch in Fig. 7 zu erkennen ist, die Endstückplatten 34 der Schalldämpfer-Endstücke 28, 32 nach radial außen über die Außenseite 96 des Schalldämpfermantels 24 hervorstehen, vorzugsweise in derartigem Ausmaß, dass diese radial außen bündig mit den Versteifungsrippen 100 enden.

Es ist zu betonen, dass an dem Schalldämpfermantel 24 sowohl an der Außenseite 96, als auch an der Innenseite 102 derartige sich im Wesentlichen in Richtung der Schalldämpfer-Längsachse L erstreckende Versteifungsrippen 100 vorgesehen sein können.

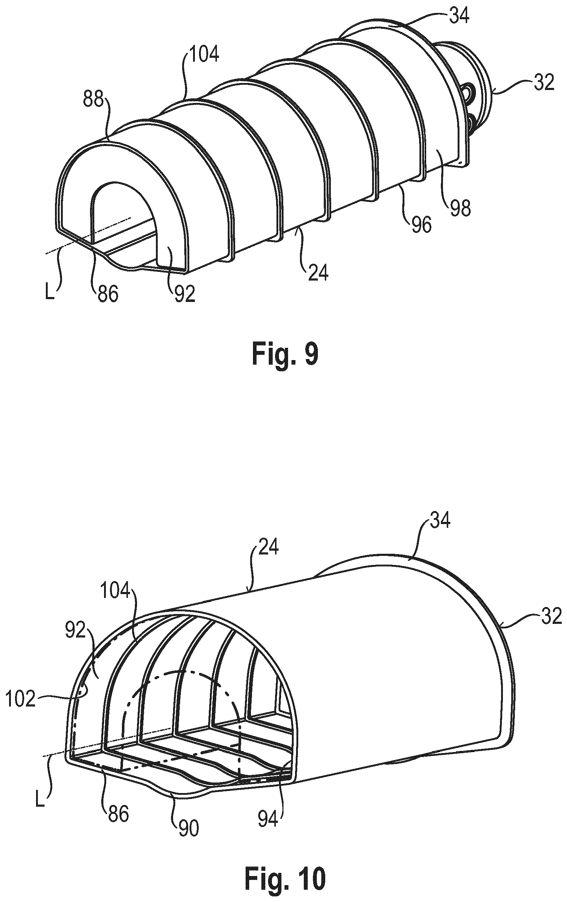

Eine alternative Ausgestaltungsart des Schalldämpfermantels 24 ist in Fig. 9 dargestellt. Bei dieser Ausgestaltungsart sind an der Außenseite 96 nach radial außen bezüglich der Schalldämpfer-Längsachse L von der Außenoberfläche 98 hervorstehende, im Wesentlichen in Umfangsrichtung um die Schalldämpfer-Längsachse L sich erstreckende Versteifungsrippen 104 vorgesehen. Die in Richtung der Schalldämpfer-Längsachse L aufeinander folgend angeordneten Versteifungsrippen 104 weisen vorzugsweise einen gleichmäßigen Abstand zueinander auf.

Bei einer in Fig. 10 dargestellten Abwandlung dieser Ausgestaltungsart sind derartige in Umfangsrichtung um die Schalldämpfer-Längsachse L sich erstreckende Versteifungsrippen 104 an der Innenseite 102 bezüglich der Innenoberfläche 94 nach radial innen hervorstehend angeordnet. Um diese kenntlich zu machen, ist in Fig. 10 das Schalldämpfungsmaterial 92 transparent dargestellt.

Die in Umfangsrichtung um die Schalldämpfer-Längsachse L sich erstreckenden Versteifungsrippen 104 verlaufen vorzugsweise ununterbrochen entlang der Außenseite 96 bzw. der Innenseite 102 des Schalldämpfermantels 24. Auch bei dieser Ausgestaltung ist es möglich, sowohl an der Außenseite 96, als auch an der Innenseite 102 derartige in Umfangsrichtung um die Schalldämpfer-Längsachse L sich erstreckende Versteifungsrippen 104 vorzusehen.

Für die Herstellung eines die Versteifungsrippen 104 aufweisenden Schalldämpfermantels 24 bzw. eines Schalldämpfermantel-Rohlings dafür wird vorzugsweise ein Blasform-Vorgang verwendet, welcher die Herstellung des Schalldämpfermantel-Rohlings auch mit in dessen Längsrichtung sich verändernder Kontur ermöglicht.

Mit Bezug auf die in den Fig. 7 bis 10 dargestellten Ausgestaltungsformen des Schalldämpfermantels 24 ist weiter darauf hinzuweisen, dass diese vier verschiedenen Ausgestaltungsarten beliebig miteinander kombiniert werden können. Es können sowohl an der Außenseite 96, als auch an der Innenseite 102 Versteifungsrippen 100, 104 beliebiger Art vorgesehen sein, so dass beispielsweise auch ein gitterartiges Muster von Versteifungsrippen 100, 104 an der Außenseite 96 oder/und an der Innenseite 102 vorhanden ist. Auch können die Versteifungsrippen 100 bzw. 104 eine von einer exakten Orientierung in Richtung der Schalldämpfer-Längsachse L oder in Umfangsrichtung um diese abweichende Orientierung aufweisen, so dass beispielsweise die Versteifungsrippen 100 ein schraubenwindungsartiges Versteifungsmuster bilden. Auch in diesem Falle eignet sich zur Herstellung eines derartigen Schalldämpfermantels 24 bzw. eines Schalldämpfermantel-Rohlings dafür vor allem ein Blasform-Vorgang.

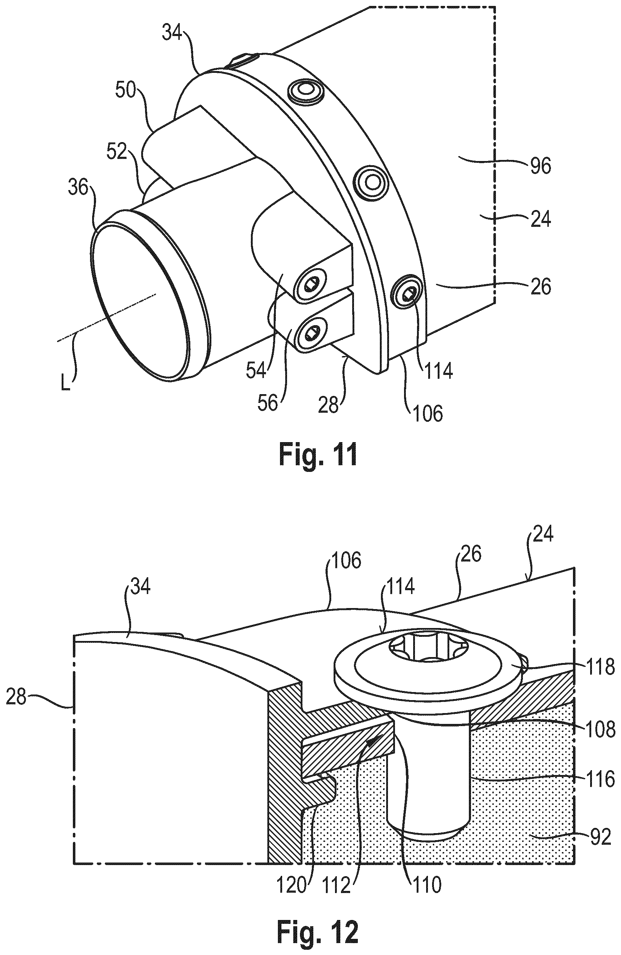

Die Fig. 11 und 12 zeigen beispielhaft anhand des Schalldämpfer-Endstücks 28 eine alternative Art der Anbindung der Schalldämpfer-Endstücke 28, 32 an den Schalldämpfermantel 24. Bei dem in Fig. 11 zu erkennenden Schalldämpfer-Endstück 28 ist von der Endstückplatte 34 desselben in Richtung der Schalldämpfer-Längsachse L hervorstehend ein Formschlussrand 106 als integraler Bestandteil des Schalldämpfer-Endstücks 28 ausgebildet. Der Formschlussrand 106 übergreift den Schalldämpfermantel 24 an dessen Außenseite 96.

In dem Formschlussrand 106 und dem Schalldämpfermantel 24 sind jeweilige Formschluss-Eingriffsöffnungen 108, 110 in Umfangsrichtung vorzugsweise mit gleichmäßigem Abstand aufeinander folgend vorgesehen, so dass bei den Schalldämpfermantel 24 axial übergreifendem Formschlussrand 106 jeweilige Paare 112 von Formschluss-Eingriffsöffnungen 108 im Formschlussrand 106 und Formschlusseingriffsöffnungen 110 im Schalldämpfermantel 24 gebildet sind.

Der in Richtung der Schalldämpfer-Längsachse L wirkende Formschluss wird durch im dargestellten Ausgestaltungsbeispiel als Schraubbolzen ausgebildete Formschluss-Eingriffsorgane 114 erzeugt. Diese sind von radial außen durch die einander überlappend positionierten Formschlusseingriffsöffnungen 108, 110 der Paare 112 hindurchgeführt. Die als Schaubbolzen ausgebildeten Formschluss-Eingriffsorgane 114 können an einem Schaft 116 derselben ein beispielsweise selbstschneidendes Gewinde aufweisen, welches sich in das Kunststoff-Aufbaumaterial des Formschlussrandes 106 oder/und das Kunststoff-Aufbaumaterial des Schalldämpfermantels 24 und ggf. auch in das Schalldämpfungsmaterial 92 einschneidet und somit eine stabile Arretierung der Formschluss-Eingriffsorgane 114 erzeugt. Ein Kopf 118 der Formschluss-Eingriffsorgane 114 überdeckt die jeweils durchgriffene Formschluss-Eingriffsöffnung 108 im Formschlussrand 106 und erzeugt an dieser Stelle einen im Wesentlichen gasdichten Abschluss.

Um grundsätzlich eine gasdichte Anbindung der Schalldämpfer-Endstücke 28, 32 an den Schalldämpfermantel 24 durch Formschluss zu erreichen, kann der Formschlussrand 106 in Abstimmung auf die Abmessung des Schalldämpfermantels 24 derart ausgebildet sein, dass der Schalldämpfermantel 24 mit seinem jeweiligen axialen Ende 26, 30 mit enger Passung im zugehörigen Formschlussrand aufgenommen ist. Zusätzlich kann radial innerhalb des Formschlussrandes 106 an der Endstückplatte 34 ein in Richtung der Schalldämpfer-Längsachse L hervorstehender Dichtrand 120 ausgebildet sein, dessen radialer Abstand zum Formschlussrand 106 derart bemessen ist, dass das axiale Ende 26 des Schalldämpfermantels 24 mit enger Passung zwischen dem Dichtrand 120 und dem Formschlussrand 106 aufgenommen ist und somit eine Labyrinthdichtung gebildet ist.

Alternativ zur Verwendung von Schraubbolzen als Formschluss-Eingriffsorgane ist es auch möglich, Nietbolzen zu verwenden, welche die Formschluss-Eingriffsöffnungen 108, 110 eines jeweiligen Paares 112 durchgreifend verformt werden und somit einerseits eine stabilen Zusammenhalt erzeugen und andererseits durch einen jeweiligen Nietkopf einen gasdichten Abschluss erzeugen.

Eine alternative Ausgestaltung einer derartigen formschlüssigen Verbindung ist in Fig. 13 anhand des Schalldämpfer-Endstücks 28 dargestellt. Im Schalldämpfermantel 24 sind in Zuordnung zu dem Schalldämpfer-Endstück 28 in Umfangsrichtung um die Schalldämpfer-Längsachse L mehrere Formschluss-Eingriffsöffnungen 110 ausgebildet. In Zuordnung zu wenigstens einem Teil der Formschluss-Eingriffsöffnungen 110 am Schalldämpfermantel 24, vorzugsweise zu jeder Formschluss-Eingriffsöffnung 110, ist am Formschlussrand 106 ein Formschluss-Eingriffsorgan 122 in Form eines Eingriffsvorsprungs als integraler Bestandteil des Formschlussrandes 106 und damit des Schalldämpferendstücks 28 ausgebildet.

Zur Herstellung des Formschlusses wird das Schalldämpfer-Endstück 28 axial auf den Schalldämpfermantel 24 aufgeschoben. Da dieser mit grundsätzlich verformbarem Kunststoffmaterial aufgebaut ist, wird der Schalldämpfermantel 24 zunächst nach radial innen zusammengedrückt, bis die Formschluss-Eingriffsorgane 122 von radial außen in die zugeordneten Formschluss-Eingriffsöffnungen 110 einrasten. Dabei kann beispielsweise auch vorgesehen sein, dass der Formschlussrand 106 in Umfangsrichtung unterbrochen ausgebildet ist und mehrere zungenartige Randabschnitte aufweist, wobei an jedem Randabschnitt beispielsweise jeweils ein Formschluss-Eingriffsorgan 122 vorgesehen sein kann. Beim Aufschieben auf den Schalldämpfermantel 24 können diese Randabschnitte des Formschlussrandes 106 nach radial außen verformt werden und bei Einrasten der Formschluss-Eingriffsvorsprünge 102 in die zugeordneten Formschluss-Eingriffsöffnungen 110 nach radial innen zurückfedern.

Ein gasdichter Abschluss kann auch bei dieser Ausgestaltungsform dadurch erreicht bzw. unterstützt werden, dass radial innerhalb des Formschlussrandes 106 der Dichtrand 120 vorgesehen ist, welcher den Schalldämpfermantel 24 an dessen Innenseite 102 axial vorzugsweise derart übergreift, dass der Dichtrand 102 an der Innenoberfläche 94 anliegt und dadurch einen dichten Abschluss beispielsweise nach Art einer Labyrinthdichtung erzeugt.

Bei den in den Fig.11-13 dargestellten Ausgestaltungsformen könnte grundsätzlich der Formschlussrand 106 am jeweiligen Schalldämpfer-Endstück 28, 32 auch so ausgebildet sein, dass dieser beim axialen Zusammenfügen in das jeweilige axiale Ende 26, 30 des Schalldämpfermantels 24 eingreifend positioniert wird und somit den Schalldämpfermantels 24 an dessen Innenseite 102 axial übergreift. Die als separate Bauteile ausgebildeten Formschluss-Eingriffsorgane 114 der Ausgestaltungsform der Fig. 11 und 12 werden dann von radial außen zunächst durch die Formschluss-Eingriffsöffnungen 110 des Schalldämpfermantels 24 und dann durch die Formschluss-Eingriffsöffnungen 108 im Formschlussrand 106 hindurchgeführt. Die als integraler Bestandteil des Formschlussrandes 106 der Ausgestaltungsform der Fig. 13 ausgebildeten Formschluss-Eingriffsorgane 122 stehen vom Formschlussrand 106 nach radial außen hervor und greifen beim Zusammenfügen von radial innen in die zugeordneten Formschluss-Eingriffsöffnungen 110 des Schalldämpfermantels ein.

## Patentansprüche

1. Schalldämpfer, insbesondere für ein Brennstoffzellensystem, umfassend:
- einen in Richtung einer Schalldämpfer-Längsachse (L) langgestreckten, rohrartigen Schalldämpfermantel (24) aus Kunststoffmaterial,
- ein an einem ersten axialen Ende (26) des Schalldämpfermantels (24) an dem Schalldämpfermantel (24) festgelegtes erstes Schalldämpferendstück aus Kunststoffmaterial,
- ein an einem zweiten axialen Ende (30) des Schalldämpfermantels (24) an dem Schalldämpfermantel (24) festgelegtes zweites Schalldämpferendstück (32) aus Kunststoffmaterial,
- an wenigstens einem Schalldämpferendstück (28, 32), wenigstens ein Befestigungselement (41) zum Befestigen des Schalldämpfers (22) an einer Tragstruktur (T).

2. Schalldämpfer nach Anspruch 1,
**dadurch gekennzeichnet,**
**dass** wenigstens ein Schalldämpferendstück (28, 32), vorzugsweise jedes Schalldämpferendstück (28, 32), von erstem Schalldämpferendstück (28) und zweitem Schalldämpferendstück (32) eine mit dem Schalldämpfermantel (24) verbundene Endstückplatte (34) und einen von der Endstückplatte (34) in Richtung von dem Schalldämpfermantel (24) weg sich erstreckenden Endstückrohrstutzen (36) umfasst,
oder/und
**dass** wenigstens ein Schalldämpferendstück (28, 32), vorzugsweise jedes Schalldämpferendstück (28, 32), von erstem Schalldämpferendstück (28) und zweitem Schalldämpferendstück (32) mit dem Schalldämpfermantel (24) durch Materialschluss, vorzugsweise Verkleben oder Verschweißen, verbunden ist.

3. Schalldämpfer nach Anspruch 1 oder 2,
**dadurch gekennzeichnet, dass** wenigstens ein Schalldämpferendstück (28, 32), vorzugsweise jedes Schalldämpferendstück (28, 32), von erstem Schalldämpferendstück (28) und zweitem Schalldämpferendstück (32) mit dem Schalldämpfermantel (24) durch Formschluss verbunden ist.

4. Schalldämpfer nach Anspruch 3,
**dadurch gekennzeichnet, dass** an dem wenigstens einen Schalldämpferendstück (28, 32) von erstem Schalldämpferendstück (28) und zweitem Schalldämpferendstück (32) oder/und an dem Schalldämpfermantel (24) wenigstens eine Formschluss-Eingriffsöffnung (108, 110) für ein Formschluss-Eingriffsorgan (114, 122) vorgesehen ist, und dass in wenigstens eine Formschluss-Eingriffsöffnung (108, 110), vorzugsweise jede Formschluss-Eingriffsöffnung (108, 110), wenigstens ein Formschluss-Eingriffsorgan (114, 122) eingreift.

5. Schalldämpfer nach Anspruch 4,
**dadurch gekennzeichnet, dass** an dem Schalldämpfermantel (24) in Zuordnung zu dem wenigstens einen Schalldämpferendstück (28, 32) von erstem Schalldämpferendstück (28) und zweitem Schalldämpferendstück (32) wenigstens eine Formschluss-Eingriffsöffnung (110) für ein Formschluss-Eingriffsorgan (122) vorgesehen ist, und dass an dem wenigstens einen Schalldämpferendstück (28, 32) von erstem Schalldämpferendstück (28) und zweitem Schalldämpferendstück (32) in Zuordnung zu wenigstens einer Formschluss-Eingriffsöffnung (110), vorzugsweise jeder-Formschluss-Eingriffsöffnung (110), wenigstens ein Formschluss-Eingriffsorgan (122) vorgesehen ist,
vorzugsweise wobei an dem wenigstens einen Schalldämpferendstück (28, 32) von erstem Schalldämpferendstück (28) und zweitem Schalldämpferendstück (32) ein den Schalldämpfermantel (24) an einer Außenseite (96) oder einer Innenseite (102) in Richtung der Schalldämpfer-Längsachse (L) übergreifender Formschlussrand (106) vorgesehen ist, und dass das wenigstens eine Formschluss-Eingriffsorgan (122) von dem Formschlussrand (106) in Richtung auf den Schalldämpfermantel (24) zu hervorsteht und in die zugeordnete Formschluss-Eingriffsöffnung (110) eingreift.

6. Schalldämpfer nach Anspruch 4,
**dadurch gekennzeichnet, dass** an dem wenigstens einen Schalldämpferendstück (28, 32) von erstem Schalldämpferendstück (28) und zweitem Schalldämpferendstück (32) und an dem Schalldämpfermantel (24) wenigstens eine Formschluss-Eingriffsöffnung (108, 110) für ein Formschluss-Eingriffsorgan (114) vorgesehen ist, und dass in wenigstens ein Paar (112) einander überlappend positionierter Formschluss-Eingriffsöffnungen (108, 110) an dem Schalldämpfermantel (24) und dem wenigstens einen Schalldämpferendstück (28, 32) von erstem Schalldämpferendstück (28) und zweitem Schalldämpferendstück (32) ein Formschluss-Eingriffsorgan (114) eingreifend positioniert ist.

7. Schalldämpfer nach Anspruch 6,
**dadurch gekennzeichnet,**
**dass** an dem wenigstens einen Schalldämpferendstück (28, 32) von erstem Schalldämpferendstück (28) und zweitem Schalldämpferendstück (32) ein den Schalldämpfermantel (24) an einer Außenseite (96) oder einer Innenseite (102) in Richtung der Schalldämpfer-Längsachse (L) übergreifender Formschlussrand (106) vorgesehen ist, und dass die wenigstens eine in dem wenigstens einen Schalldämpferendstück (28, 32) von erstem Schalldämpferendstück (28) und zweitem Schalldämpferendstück (32) vorgesehene Formschluss-Eingriffsöffnung (108) in dem Formschlussrand (106) vorgesehen ist, oder/und
**dass** wenigstens ein Formschluss-Eingriffsorgan (114), vorzugsweise jedes Formschluss-Eingriffsorgan (114), einen Schraubbolzen oder einen Nietbolzen umfasst.

8. Schalldämpfer nach Anspruch 5 oder 7,
**dadurch gekennzeichnet, dass** an dem wenigstens einen Schalldämpferendstück (28, 32) von erstem Schalldämpferendstück (28) und zweitem Schalldämpferendstück (32) in radialem Abstand zu dem Formschlussrand (106) ein Dichtungsrand (120) vorgesehen ist, und dass ein axiales Ende (26, 30) des Schalldämpfermantels (24) zwischen den Formschlussrand (106) und den Dichtungsrand (120) eingreifend angeordnet ist.

9. Schalldämpfer nach einem der Ansprüche 1-8,
**dadurch gekennzeichnet, dass** das erste Schalldämpferendstück (28) und das zweite Schalldämpferendstück (32) zueinander identisch ausgebildet sind.

10. Schalldämpfer nach einem der Ansprüche 1-9,
**dadurch gekennzeichnet, dass** an wenigstens einem Schalldämpferendstück (28, 32), vorzugsweise jedem Schalldämpferendstück (28, 32), von erstem Schalldämpferendstück (28) und zweitem Schalldämpferendstück (32) wenigstens ein Befestigungsbereich (38, 40) zum Befestigen eines Befestigungselements (41) an dem wenigstens einen Schalldämpferendstück (28, 32) vorgesehen ist.

11. Schalldämpfer nach Anspruch 10,
**dadurch gekennzeichnet, dass** an dem wenigstens einen Schalldämpferendstück (28, 32) zwei Befestigungsbereiche (38, 40) jeweils zum Befestigen eines Befestigungselements (41) an dem wenigstens einen Schalldämpferendstück (28, 32) vorgesehen sind,
vorzugsweise wobei jeder an dem wenigstens einen Schalldämpferendstück (28, 32) vorgesehene Befestigungsbereich (38, 40) wenigstens eine Befestigungselement-Anlagefläche (68, 70, 72, 74) aufweist, und dass die den beiden Befestigungsbereichen (38, 40) zugeordneten Befestigungselement-Anlageflächen (68, 70, 72, 74) bezüglich der Schalldämpfer-Längsachse (L) im Wesentlichen voneinander weg orientiert sind.

12. Schalldämpfer nach Anspruch 10 oder 11,
**dadurch gekennzeichnet, dass** jeder Befestigungsbereich (38, 40) wenigstens zwei Befestigungsstellen (42, 44, 46, 48) aufweist, wobei an jeder Befestigungsstelle (42, 44, 46, 48) ein Befestigungselement (41) durch ein Befestigungsorgan (66), vorzugsweise Schraubbolzen, an dem wenigstens einen Schalldämpferendstück (28, 32) festlegbar ist,
vorzugsweise wobei jede Befestigungsstelle (42, 44, 46, 48) ein in das Kunststoffmaterial des wenigstens einen Schalldämpferendstücks (28, 32) eingebettetes Innengewindeorgan (58, 60, 62, 64) umfasst, vorzugsweise wobei das Innengewindeorgan (58, 60, 62, 64) mit Metallmaterial aufgebaut ist.

13. Schalldämpfer nach einem der Ansprüche 10-12, sofern auf Anspruch 2 rückbezogen
**dadurch gekennzeichnet, dass** jeder Befestigungsbereich (38, 40) wenigstens einen an die Endstückplatte (34) und den Endstückrohrstutzen (36) des wenigstens einen Schalldämpferendstücks anschließenden Befestigungsvorsprung (50, 52, 54, 56) umfasst.

14. Schalldämpfer nach Anspruch 13, sofern auf Anspruch 12 rückbezogen,
**dadurch gekennzeichnet, dass** jeder Befestigungsbereich (38, 40) in Zuordnung zu jeder Befestigungsstelle (42, 44, 46, 48) einen Befestigungsvorsprung (50 52, 54, 56) umfasst, wobei die einem Befestigungsbereich (38, 40) zugeordneten Befestigungsvorsprünge (50, 52, 54, 56) in Abstand zueinander angeordnet sind.

15. Schalldämpfer nach einem der Ansprüche 10-14,
**dadurch gekennzeichnet, dass** jedes Befestigungselement (41) einen Gegen-Befestigungsbereich (76) zur Festlegung an einem Befestigungsbereich (38, 40) umfasst.

16. Schalldämpfer nach einem der Ansprüche 1-15,
**dadurch gekennzeichnet,**
**dass** in dem Schalldämpfermantel (24) Schalldämpfungsmaterial (92) angeordnet ist, vorzugsweise wobei das Schalldämpfungsmaterial (92) poröses oder/und geschäumtes Material oder/und Fasermaterial umfasst, oder/und dass das Schalldämpfungsmaterial (92) eine Innenoberfläche (94) des Schalldämpfermantels (24) wenigstens bereichsweise überdeckt,
oder/und
**dass** an einem Umfangsbereich des Schalldämpfermantels eine vorzugsweise in Richtung der Schalldämpfer-Längsachse (L) sich erstreckende Flüssigkeit-Sammelausformung (90) vorgesehen ist.

17. Schalldämpfer nach einem der Ansprüche 1-16,
**dadurch gekennzeichnet,**
**dass** an einer Außenseite (96) des Schalldämpfermantels (24) wenigstens eine Versteifungsrippe (100, 104), vorzugsweise eine Mehrzahl von in Richtung der Schalldämpfer-Längsachse (L) aufeinander folgend angeordneten Versteifungsrippen (104) oder/und eine Mehrzahl von in Umfangsrichtung um die Schalldämpfer-Längsachse (L) aufeinander folgend angeordneten Versteifungsrippen (100), vorgesehen ist,
oder/und
**dass** an einer Innenseite (102) des Schalldämpfermantels (24) wenigstens eine Versteifungsrippe (100, 104), vorzugsweise eine Mehrzahl von in Richtung der Schalldämpfer-Längsachse (L) aufeinander folgend angeordneten Versteifungsrippen (104) oder/und eine Mehrzahl von in Umfangsrichtung um die Schalldämpfer-Längsachse (L) aufeinander folgend angeordneten Versteifungsrippen (100), vorgesehen ist.

18. Schalldämpfer nach Anspruch 17,
**dadurch gekennzeichnet, dass** wenigstens eine Versteifungsrippe (100), vorzugsweise jede Versteifungsrippe (100), sich im Wesentlichen in Richtung der Schalldämpfer-Längsachse (L) erstreckt, oder/und dass wenigstens eine Versteifungsrippe (104), vorzugsweise jede Versteifungsrippe (104), sich im Wesentlichen in Umfangsrichtung um die Schalldämpfer-Längsachse (L) erstreckt.

19. Brennstoffzellensystem, insbesondere für ein Fahrzeug, umfassend wenigstens eine Brennstoffzelle (12) und eine Brennstoffzellenabgas von der wenigstens einen Brennstoffzelle (12) aufnehmende Brennstoffzellen-Abgasanlage (20) mit wenigstens einem Schalldämpfer (22) nach einem der Ansprüche 1-18.

20. Verfahren zur Herstellung eines Schalldämpfers (22) nach einem der Ansprüche 1-18, umfassend die Maßnahmen:
a) Bereitstellen des Schalldämpfermantels (24) durch Abtrennen eines Längenabschnitts (A) von einem Schalldämpfermantel-Rohling,
b) Bereitstellen des ersten Schalldämpferendstücks (28) und des zweiten Schalldämpferendstücks (32),
c) Festlegen des ersten Schalldämpferendstücks (28) an dem ersten axialen Ende (26) des Schalldämpfermantels (24) und Festlegen des zweiten Schalldämpferendstücks (32) an dem zweitem axialen Ende (30) des Schalldämpfermantels (24).

21. Verfahren nach Anspruch 20,
**dadurch gekennzeichnet,**
**dass** der bei der Maßnahme a) zum Bereitstellen des Schalldämpfermantels (24) verwendete Schalldämpfermantel-Rohling durch Extrusion oder Blasformen hergestellt wird,
oder/und
**dass** das erste Schalldämpferendstück (28) und das zweite Schalldämpferendstück (32) mit einem Kunststoff-Gussverfahren hergestellt werden.

22. Verfahren nach Anspruch 20 oder 21
**dadurch gekennzeichnet, dass** die Maßnahme a) eine Maßnahme a1) zum Anordnen von Schalldämpfungsmaterial (92) in dem Schalldämpfermantel (24) umfasst,
vorzugsweise wobei die Maßnahme a1) das Anordnen eines Schalldämpfungsmaterial-Rohlings in dem Schalldämpfermantel-Rohling vor dem Abtrennen des Längenabschnitts (A) umfasst, oder/und dass die Maßnahme a1) das Anordnen wenigstens eines Schalldämpfungsmaterial-Körpers in dem Längenabschnitt (A) nach dem Abtrennen des Längenabschnitts (A) umfasst.

23. Verfahren nach einem der Ansprüche 20-22,
**dadurch gekennzeichnet,**
**dass** die Maßnahme c) das Festlegen des ersten Schalldämpferendstücks (28) und des zweiten Schalldämpferendstücks (32) an dem Schalldämpfermantel (24) durch Materialschluss, vorzugsweise Verkleben oder Verschweißen, oder/und durch Formschluss umfasst,
oder/und
**dass** in einer vorzugsweise nach der Maßnahme c) durchgeführten Maßnahme d) an wenigstens einem Schalldämpferendstück (28, 32), vorzugsweise jedem Schalldämpferendstück (28, 32), von erstem Schalldämpferendstück (28) und zweitem Schalldämpferendstück (32) wenigstens ein Befestigungselement (41), vorzugsweise durch Verschrauben, festgelegt wird.
